# EUROPEAN PATENT APPLICATION

(11) **EP 4 718 820 A1**
(43) Date of publication of application: **01.04.2026**
(21) Application number: 24203612.7
(22) Date of filing: 30.09.2024
(51) Int. Cl.: H04L 67/12, H04L 67/288, H04L 67/55, H04L 9/40

(54) **HIGHLY AVAILABLE AND SECURED HIERARCHICAL EDGE COMPUTING COMMUNICATION ARCHITECTURE FOR DISTRIBUTED GRID INTELLIGENCE**

(71) Applicant: Hitachi Energy Ltd, 8050 Zürich (CH)
(72) Inventor: GORE, Rahul, 128 34 Skarpnäck (SE); BOSE, Arijit Kumar, 560049 Bengaluru (IN); SEHESTEDT, Stephan, 67117 Limburgerhof (DE)
(74) Representative: Valea AB

(57) **Abstract**

A method for edge-cloud computing performed in a system comprising a number of bay clients (23a1, 23b1, 23c1), each bay client belonging to a bay, a plurality of edge devices (22a, 22b, 22c), with thereto belonging edge brokers (22a1, 22b1, 22c1), and a cloud 21. The method comprises a bay client (23a1) publishing primary equipment data to an edge broker (22a1), and the edge broker (22a1) publishing, or making available, the equipment data, in the cloud (21). A primary edge device (22a), from the plurality of edge devices (22a, 22b, 22c), is designated to each bay, and where the edge brokers (22a1, 22b1, 22c1) are bridged to each other, thus making any sensor data published on one edge broker (22a1) available on any other edge broker (22b1, 22c1).

## Description

### TECHNICAL FIELD

Embodiments herein relate to a method for edge-cloud computing comprising publishing, by a number of bay clients, primary equipment data to an edge broker, each bay client belonging to a bay and the edge broker belonging to an edge device. The method further comprises publishing, or making available, by the edge broker, the equipment data in a cloud.

Embodiments herein also relate to a system for edge cloud computing through which the method can be implemented.

Embodiments herein also relate to a computer program and a carrier comprising the computer program.

### BACKGROUND

The present invention relates to industrial Internet of Things, edge-cloud computing. The existing edge-cloud architecture used in plants require an immediate repair of edge or loT device or communication link in case of their failures, malfunction or security-compromised devices and the monitoring or protection application becomes unavailable during repair time.

Electrical power distribution is becoming increasingly complex with the large degree of integration of distributed energy resources (DERs). The Industrial loT solutions based on distributed grid edge-cloud computing have come forward to address the challenges of operating increasingly complex distribution systems. The concept of hierarchical loT solution for grid intelligence will likely be the future of the grid's monitoring, protection, automation, and control architecture. The edge-cloud computing and advanced communication infrastructure can provide enhanced distributed grid intelligence.

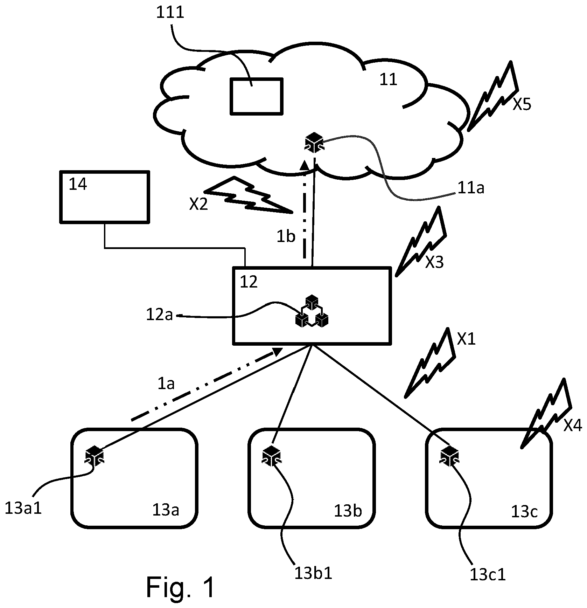

Fig. 1 is an illustration of an example of an existing edge-cloud based loT architecture for a typical substation network where the cloud 11 hosts monitoring protection applications 111. The edge device 12 aggregates data from multiple sensors and feed to cloud for consumption of cloud-based applications. Among all options, publish-subscribe-based MQTT (Message Queuing Telemetry Transport) has come forward as a widely used M2M communication protocol by loT devices due to its lightweight implementation and low packet losses in high latency environment. For each bay 13a, 13b, 13c, the loT sensor devices, via an MQTT client 13a1, 13b1, 13c1, publishes 1a the primary equipment data to a station edge device 12, i.e. to a MQTT broker 12a, and in the cloud a client 11a, i.e. a MQTT client, subscribes to sensor data via the same broker 12a.

The figure also shows a control room 14 for visualization exemplified with IEC 61850, DNP 3.0 and Web IF.

The distribution system often experiences many different undesired events, such as different types of temporary and permanent faults, loss of measurement data, and cyber-attacks. The distributed approach relies on data from diverse sources fed to computing devices embedded in the distribution system to coordinate and optimize both utility and nonutility devices.

The accuracy and success of grid's intelligence application depends upon the continuous availability of primary equipment data at decision-making units, e.g. edge or cloud. The data availability can be hampered by sensor to edge communication failures X1, edge to cloud communication failures X2, edge device failures X3, and security failures of loT devices X4 due to cyber-attacks, certification expiries etc.

All such failure modes lead to operation stalls in plants and subsequently process data unavailability at the cloud X5. The process data is fed to monitoring, protection functions 111 hosted by the cloud 11 which in turn monitors or protects the primary assets in the plant. The non-availability of process data makes monitoring, protection applications to stop functioning for the device, communication link, or a security event is often resolved by maintenance personnel in the plant.

From cybersecurity perspective, a key challenge when it comes to maintaining a healthy cybersecurity and reliable posture of MQTT based connection in industrial environment is having valid TLS X.509 certificate(s).

Unavailability of communication service due to X.509 digital certificate expiry along with the renewed X.509 digital certificate not being provisioned in time inside the industrial field level devices is a challenging task to deal with. Often this is because of inability to remote monitor the X.509 digital certificate status of such industrial devices located at field level as these are typically not internet connected and are physically zoned in areas with tighter physical perimeter controls that limits quicker physical access.

### SUMMARY

As part of developing embodiments herein, the inventors identified some problems that first will be described.

There is a need to reduce events resulting in central monitoring and protection applications not being available due to failures of edge devices X3, edge communication links X1, X2 and security failures of loT devices X4. Such failures result in breaking the sensor to cloud dataflow and process data not being available at the cloud X5 for monitoring and for protection functions. The non-functioning applications may miss to detect the faults, undesirable events associated with plant that can result in production stalls, a loss of revenues, and reputation.

Embodiments herein propose a highly available and redundant communication architecture for edge-cloud computing that improves the availability of monitoring and protection applications even during device failures thereby saving the cost associated with plant stalls and loss of revenues.

Embodiments herein also propose a proactive based method to monitor and address the status of TLS X.509 digital certificates in industrial field level devices.

According to an aspect of embodiments herein, the object is achieved by a method for edge-cloud computing the method comprising:
- publishing, by a number of bay clients, each bay client belonging to a bay, primary equipment data to an edge broker, belonging to an edge device, and
- publishing, or making available, by the edge broker, the equipment data in a cloud.

The system comprises a plurality of edge devices, with thereto belonging edge brokers. It is proposed that a primary edge device, from the plurality of edge devices, is designated to each bay, and that the edge brokers are bridged to each other, where the method further comprises:
- making any sensor data published on one edge broker available on any other edge broker.

Aspects of embodiments proposes that the method may comprise publishing, or making available, by a cloud broker at cloud level, the equipment data in the cloud, where the cloud broker may be bridged with each edge broker.

It is also proposed that several cloud brokers may publish, or make available, the equipment data in the cloud, where each cloud broker may be bridged with each edge broker, thereby making any sensor data published on any edge broker available in the cloud brokers.

Embodiments teaches that where several cloud brokers publish, or make available, the equipment data in the cloud, the cloud brokers may use load balancing functionality to allocate certain edge data to specific cloud brokers.

The load balancing functionality may allocate the edge brokers to a particular cloud broker, whereby data traffic may be evenly divided among the cloud brokers.

Proposed embodiments teaches that each bay client may publish its equipment data to its primary edge broker and to a secondary edge broker, where the secondary edge broker may belong to an edge device designated as a primary edge device to another bay.

According to an aspect of embodiments herein, the object may also be achieved in a system as described above where each bay comprises a bay broker, where each edge device comprises an edge client, and where each cloud broker is associated with a cloud client. It is proposed that the method may comprise that the bay client and the bay broker may use a current digital public key certificate for establishment of the connection with an edge client and edge broker, where both the bay client and the bay broker use the same current digital public key certificate, where the bay may store the corresponding current private key.

It is further proposed that the method may comprise that the bay may use a renewal digital public key certificate for its attestation at a next enrolment phase of its current certificate, where the bay client may publish a certificate status message comprising:
- the ID of the client;
- the value of its current public key;
- the remaining lifetime of the current key; and
- the renewal public key,
to its primary edge broker.

It is further proposed that the method may comprise that a security administrator or an automated agent at cloud level, after receipt of the certificate status message via the edge device, may:
- analyse received certificate status message;
- generate renewed certificates for affected industrial devices located at the bay; and
- trigger the publication of an aggregated certificate renewal message, comprising attributes holding the renewal key and the generated renewed certificate, from the cloud client to the edge broker.

It is further proposed that method may comprise that the bay may:
- receive, by the bay broker, the certificate renewal message via the edge device,
- verify, by the industrial device at the bay, whether the attributes in the received certificate renewal message holding the renewal public key matches the renewal public key as sent in the certificate status message; and
- process the renewed certificate from the certificate renewal message if the attributes in the received certificate renewal message holding the renewal public key matches the renewal public key.

Aspects of proposed embodiments teaches that the method may comprise that an initial digital public key certificate may be used, by the bay client and the bay broker, as the current key when it first starts to execute at its operational site, and that the renewed certificate and thereto belonging key is used, by the bay client and the bay broker, as the current key after renewal of a previously used key.

Aspects of proposed embodiments teaches that the method may comprise:
- receiving, by the edge broker, the certificate status message from the bay client; and
- publishing, by the edge client, the certificate status message received from the edge broker to a cloud broker.

It is also proposed that the method may comprise that the edge broker, at the receipt of a certificate status message, is:
- waiting for a set aggregate level of publication messages from the bay client expressing that the current certificate is about to expire, and that it will expire within a set time interval; and
- triggering, when the set aggregate level has been reached, the edge client to publish the certificate status message to the cloud broker.

It is proposed that the method may comprise generating renewed certificates by a Certification Authority, CA, for certificate generation and digital signing capability at cloud level by attesting its corresponding renewal public key as received in the certificate status message.

Aspects of embodiments teaches that the method may comprise:
- receiving, by the edge broker, the published certificate renewal message from the cloud client;
- analysing, by the edge device, the received certificate renewal message;
- determining, by the edge device, to which industrial devices, and to which bay the renewed certificate is to be sent; and
- notifying, by the edge client, the certificate renewal message to the bay broker.

It is also proposed that the method may comprise that the industrial device at the bay is:
- putting the renewed certificate into use when the current certificate expires; and
- generating a new renewal digital public key certificate to be used during the next renewal cycle.

According to another aspect of embodiments herein, the object is achieved by a system for edge-cloud computing, where a number of bay clients, each bay client belonging to a bay, are adapted to publish primary equipment data to an edge broker, belonging to an edge device, and where the edge broker is adapted to publish the equipment data, or makes the equipment data available in a cloud.

It is proposed that the system comprises a plurality of edge devices, with thereto belonging edge brokers, where a primary edge device, from the plurality of edge devices, is designated to each bay, where the edge brokers are adapted to be bridged so that any sensor data published on one edge broker is available on any other edge broker.

Aspects of proposed embodiments teaches that a cloud broker at cloud level may be adapted to publish or make available the equipment data in the cloud, and where the cloud broker is adapted to be bridged with each edge broker.

It is also proposed that several cloud brokers may be adapted to publish or make available the equipment data in the cloud, and where each cloud broker may be adapted to be bridged with each edge broker so that any sensor data published on any edge broker is available in the cloud brokers.

Embodiments are proposed where several cloud brokers may be adapted to publish or make available the equipment data in the cloud, and where the cloud brokers may be adapted to use load balancing functionality to allocate certain edge data to specific cloud brokers.

The load balancing may be adapted to allocate the edge brokers to a particular cloud broker so that data traffic is evenly divided among the cloud brokers.

It is also proposed that each bay client may be adapted to publish its equipment data to its primary cloud broker, and publish its equipment data to a secondary cloud broker, where the secondary cloud broker belongs to an edge device designated as a primary edge device to another bay.

According to an aspect of embodiments herein, the object may also be achieved by a system as previously described, where each bay comprises a bay broker, where each edge device comprises an edge client, and where each cloud broker is associated with a cloud client. In such embodiment the system may be adapted to:
- use, by the bay client and the bay broker, a current digital public key certificate for establishment of the connection with an edge client and edge broker, where both the bay client and the bay broker are adapted to use the same current digital public key certificate;
- store, by the bay, the corresponding current private key;
- use, by the bay, a renewal digital public key certificate for its attestation at a next enrolment phase of its current certificate; and
- publish, by the bay client, a certificate status message comprising:
   - the ID of the client;
   - the value of its current public key;
   - the remaining lifetime of the current key; and
   - the renewal public key,
to its primary edge broker.

It is proposed that the system may further comprise a security administrator or an automated agent at cloud level adapted to, after receipt of the certificate status message via the edge device:
- analyse received certificate status message;
- generate renewed certificates for affected industrial devices located at the bay; and
- trigger the publication of an aggregated certificate renewal message, comprising attributes holding the renewal key and the generated renewed certificate, from the cloud client to the edge broker.

Aspects of embodiments teaches that the industrial device at the bay may be adapted to:
- receive, by the bay broker, the certificate renewal message via the edge device,
- verify whether the attributes in the received certificate renewal message holding the renewal public key matches the renewal public key as sent in the certificate status message; and
- process the renewed certificate from the certificate renewal message if the attributes in the received certificate renewal message holding the renewal public key matches the renewal public key.

The bay client and the bay broker may be further adapted to use an initial digital public key certificate as the current key when it first starts to execute at its operational site and use the renewed certificate and thereto belonging key as the current key after renewal of a previously used key.

It is proposed that the edge device may be adapted to:
- receive, by the edge broker, the certificate status message from the bay client; and
- publish, by the edge client, the certificate status message received from the edge broker to a cloud broker.
it is further proposed that the edge broker may be adapted to:
- wait for a set aggregate level of publication messages from the bay client expressing that the current certificate is about to expire, and that it will expire within a set time interval; and
- trigger, when the set aggregate level has been reached, the edge client to publish the certificate status message to the cloud broker.

Aspects of proposed embodiments teaches that a Certification Authority, CA, for certificate generation and digital signing capability at cloud level may be adapted to generate renewed certificates by attesting its corresponding renewal public key as received in the certificate status message.

Proposed embodiments teaches that the edge device may be adapted to:
- receive, by the edge broker, the published certificate renewal message from the cloud client;
- analyse the received certificate renewal message;
- determine to which industrial devices, and to which bay, the renewed certificate is to be sent; and
- notify, by the edge client, the certificate renewal message to the bay broker.

It is also proposed that the industrial device at the bay may be adapted to:
- put the renewed certificate into use when the current certificate expires; and
- generate a new renewal digital public key certificate to be used during the next renewal cycle.

According to an aspect of embodiments herein, the object is achieved by a computer program comprising instructions, which when executed by a processor, causes the processor to perform actions according to any of the proposed methods.

According to an aspect of embodiments herein, the object is achieved by a carrier comprising the described computer program, wherein the carrier is one of an electronic signal, an optical signal, an electromagnetic signal, a magnetic signal, an electric signal, a radio signal, a microwave signal, or a computer-readable storage medium.

Thanks to the proposed embodiments a highly available and redundant communication architecture for an edge-cloud-computing-based loT system is provided.

Embodiments herein may provide one or more of the following advantages:
With this method it is possible to reduce the effect of edge-device, communication, and security failures and ensure process data availability at cloud despite such failures thereby saving the cost associated with probable production stall and improving the availability of monitoring and protection applications.

Thus, in contrast to existing loT architectures, the proposed architecture makes sure that the process data is available at cloud level even in the case of multiple failure modes. In all these cases, the plant operation continues, and the monitoring and protection applications remain available. The failed components do not need immediate attention. The maintenance of failed devices or links can be planned. Many security-related issues can be resolved from the cloud while the system is operational without manual intervention.

The benefit and novelty of the proposed method is also a proactive management, i.e. renewal and distribution, of X.509 public key digital certificates before the expiry of currently used X.509 public key digital certificates with only MQTT, i.e., a self-contained MQTT level message topic, without the need of any additional PKI certificate management infrastructure such as SCEP, EST, CRL and OCSP. This will reduce communication infrastructure cost. The cyber security protection of the MQTTS messages and thus the legitimacy of the contents as getting transmitted under these topics are getting secured with TLS channel.

### BRIEF DESCRIPTION OF THE DRAWINGS

Examples of embodiments herein are described in more detail with reference to attached drawings in which:
- **Figure 1**: is a schematic illustration of an existing IoT architecture based on publish-subscribe (MQTT) communication with one edge device per station.
- **Figure 2**: is a schematic illustration of a proposed IoT architecture based on publish-subscribe (MQTT) communication.
- **Figure 3**: is a schematic illustration of a proposed IoT architecture having redundant edge devices with bridged MQTT brokers.
- **Figure 4**: is a schematic illustration of a proposed IoT architecture having bridged MQTT brokers at cloud and edge-level.
- **Figure 5**: is a schematic illustration of a proposed IoT architecture having multiple brokers with load balancing functionality at cloud.
- **Figure 6**: is a schematic illustration of a proposed IoT architecture with redundant paths between sensor and edge devices.
- **Figure 7**: is a schematic illustration of a first and second phase in certificate management.
- **Figure 8**: is a schematic illustration of a third and fourth phase in certificate management.
- **Figure 9**: is a generalized block diagram of embodiments of a device.

### DETAILED DESCRIPTION

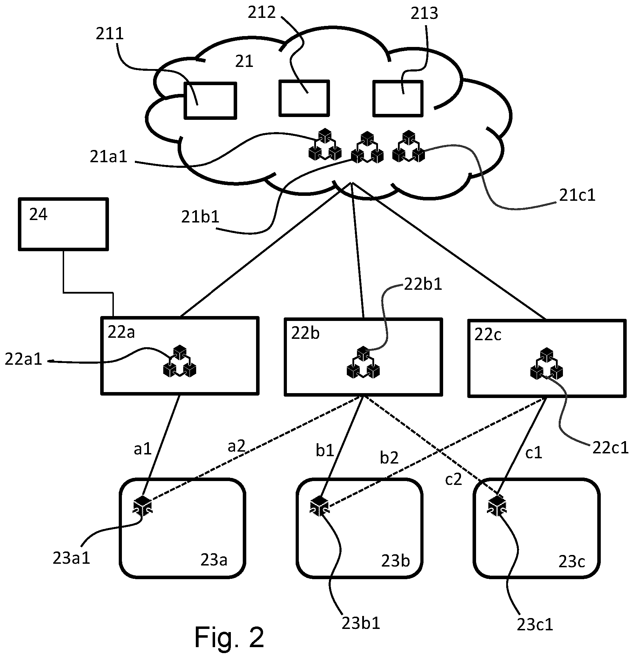

Proposed embodiments will now be described starting with reference to Figure 2 illustrating a front-end of loT system. Sensors in respective bay 23a, 23b, 23c collect data from primary equipment in the bays and send to the cloud 21 via an edge device 22a, 22b, 22c. Here the MQTT client 23a1 at loT sensor publishes equipment status data to MQTT broker 22a1, in the edge device 22a, and another MQTT client 21a1 in the cloud 21 subscribes to same broker 22a1 in the edge device 22a to obtain the sensor data. To improve the availability primary asset data at cloud following building blocks have been proposed.

IoT Sensor devices: The MQTT client 23a1 in a loT sensor device from a bay 23a may use two paths a1, a2, here called a primary path a1 to same bay broker 22a and secondary path a2 to another bay broker 22b, to publish its sensor data, e.g. the MQTT client 23a1 of the first bay 23a loT device may be connected to two MQTT brokers 22a, 22b from edge devices related to the first bay 23a and the second bay 23b.

Edge devices: The proposed architecture may use multiple edge devices 22a, 22b, 22c, e.g. one per bay 23a, 23b, 23c, instead of one per station, to aggregate the sensor data. The MQTT brokers 22a1, 22b1, 22c1 at all the edge devices 22a, 22b, 22c may be bridged so that any sensor data published on one edge broker 22a1 would be available on brokers 22b1, 22c1 from other edge devices 22b, 22c as well.

Cloud: The cloud 21 hosts monitoring and protection application 211 that process primary equipment data. The data is made available by a cloud broker 21a, such as an MQTT broker at cloud level, and it is proposed that the cloud broker 21a may be bridged with edge-brokers 22a1, 22b1, 22c1 so that any sensor data published on an edge broker would be available at the cloud as well.

The cloud 21 needs to support the data acquisition from multiple edge devices 22a, 22b, 22c. This may result in data congestion at cloud level broker. It is proposed that multiple cloud brokers 21a1, 21a2, 21a3, such as MQTT brokers, may be used at cloud level, and that load balancing functionality 212 may allocate certain edge data to specific cloud brokers to have reliable data delivery from edge to cloud. It is also proposed that a 'Fail mode detection' block 213 may continuously monitor the sensor data delivery, detect the failure modes and initiate the actions.

The core essence of proposed embodiments is a is a highly available and redundant architecture ensuring the sensor data availability at cloud level despite edge device, communication, and security failures in loT devices.

The architecture resolves following failure modes:

### Missing data for analysis due to edge to cloud communication failures:

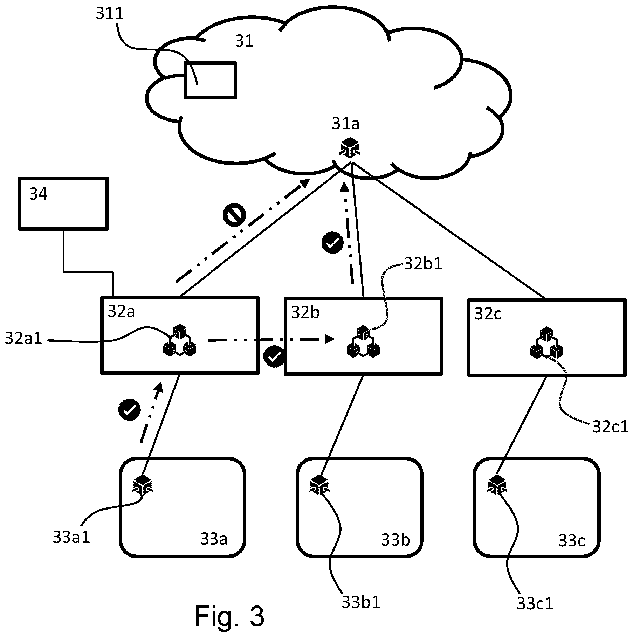

The growing loT devices need to talk to each other and to cloud. This puts stress on already overloaded communication infrastructure. Typical communication failures are network congestion, broken links, unreliable communication etc. Fig. 3 shows a communication failure between the first bay edge device 32a and cloud 31. To deal with such communication failure, the system proposes bridging the edge brokers 32a1, 32b1, 32c1. The bridging enables the availability of any data published on any edge broker 32a1 to other edge brokers 32b1, 32c1. The sensor data published on the edge broker belonging to the first bay 33a can be made available at edge devices 32b, 32c belonging to the second bay 33b or the third bay 33c. Thus, even if there is a link failure link failure between the edge device 32a and the cloud 31, the sensor data published by loT sensor device at the first bay 33a can be accessed by the cloud client 31a via the second edge bay broker 32b1.

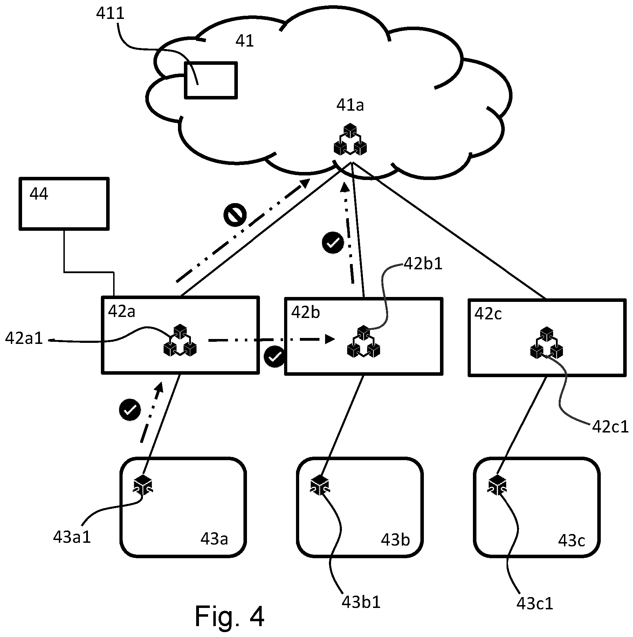

It is proposed that a cloud broker 41a may be implemented instead of a cloud client at cloud level 41 as shown in Fig. 4, which will further increased data availability. The cloud broker 41a may be bridged with all the edge-level brokers 42a1, 42b1, 42c1. This design ensures the continuous sensor data availability at cloud level despite communication failure between edge and cloud.

### Missing data for analysis due to network congestion or flooding at cloud:

The cloud level broker 41a caters to multiple edge-level devices 42a, 42b, 42c to acquire sensor data. There is a possibility of network congestion or data flooding due to aggregation of multiple edge-level MQTT data. This may result in sensor data being not available.

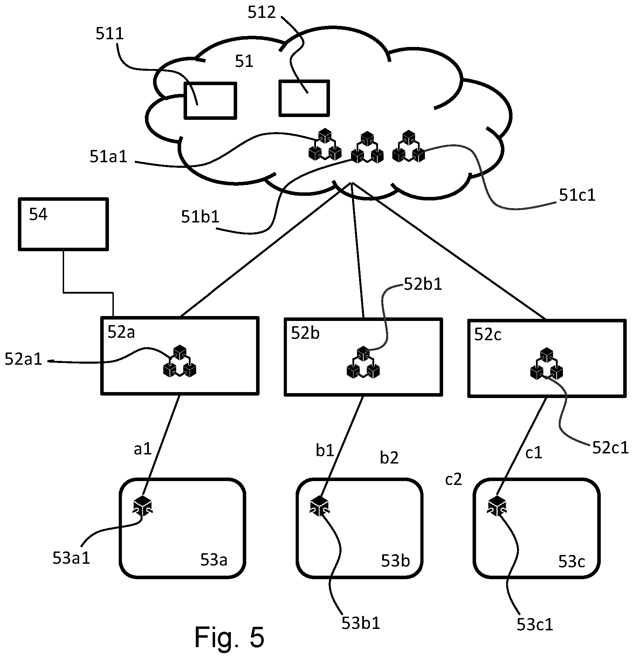

To deal with this, Fig. 5 illustrates an embodiment where it is proposed to have multiple bridged cloud brokers 51a1, 51b1, 51c1 at cloud level 51 with load balancing functionality 512. The load balancing 512 allocates the edge brokers 52a1, 52b1, 52c1 to a particular cloud broker 51a1, 51b1, 51c1 so that data traffic is evenly divided among cloud brokers 51a1, 51b1, 51c1. The load balancing 512 monitors the traffic on continuous basis and alters the cloud to edge broker allocations to suit to traffic conditions.

### Missing data for analysis due to edge device and/or sensor communication related failures:

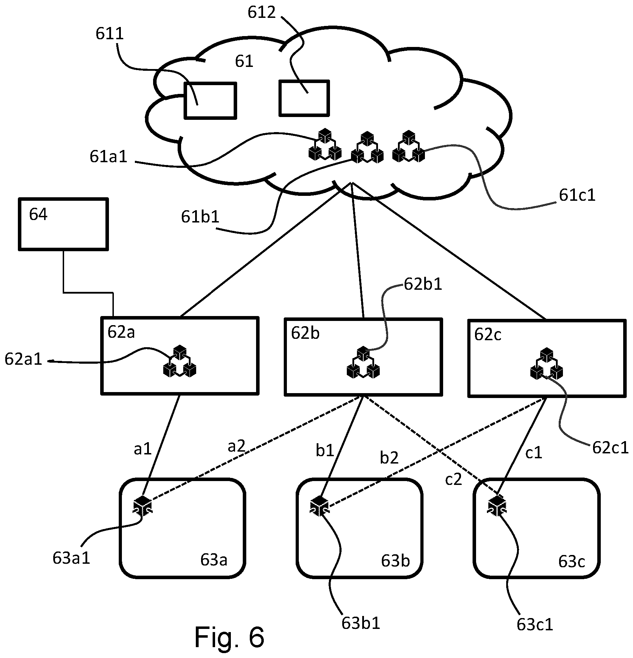

The edge device failure or sensor to edge device communication failure are single point failures and hence they can bring the whole system to stall. A redundant path communication between loT sensor devices and edge devices is proposed as shown in Fig. 6. Here it can be seen that the bay client 63a1 in the first bay 63a, with thereto belonging loT device, may be linked to two edge devices 62a, 62b via a primary path a1 and a secondary path a2, where, in the case of the first bay device 63a, the first edge device 62a would be seen as a primary edge device, and the second edge device 62b would be seen as a secondary edge device.

Thus, the bay device 63a can publish data to brokers 62a1, 62b1 from both its primary edge device 62a and its secondary edge device 62b. In case of failure of the primary edge device 62a, or a failure of primary path a1, the communication link between the first bay 63a and the first edge device 62a, the first bay 63a loT sensor data can be sent to the primary edge device 62b of the second bay 63b via the secondary path a2 and then to the cloud 61.

### Missing data for analysis due to security related failures:

From cybersecurity perspective, a key challenge when it comes to maintaining a healthy cybersecurity and reliable posture of MQTT based connection in industrial environment is having valid TLS X.509 certificate(s).

Embodiments are propose wherethrough a proactive based method to monitor and address the status of TLS X.509 digital certificates in industrial field level devices is provided.

A method to proactively manage x.509 digital certificate expiry to address the challenge as listed above will now be described in four phases.

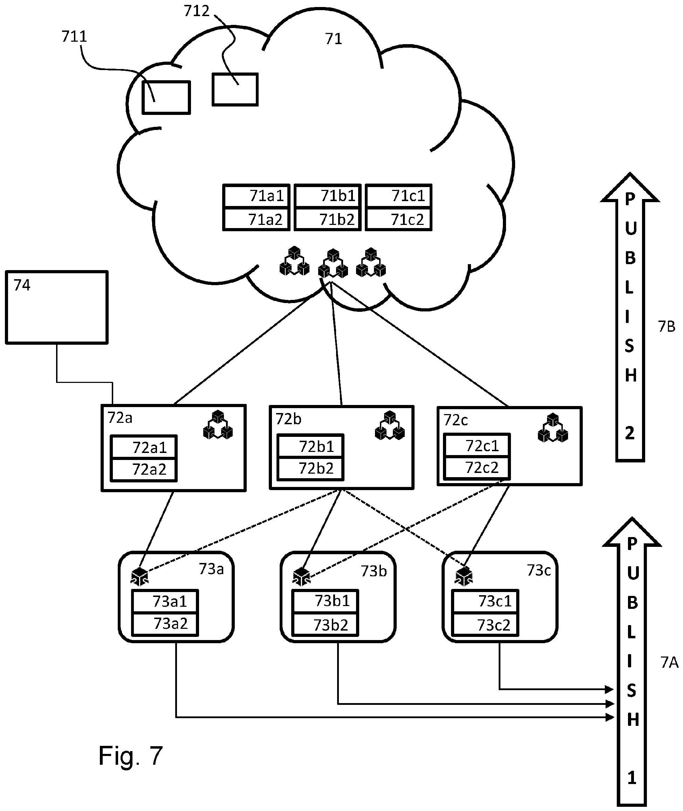

**FIRST PHASE** - Figure 7 shows an illustration of an architecture where it is proposed that each bay device 73a, 73b, 73c, i.e. the industrial devices at bay level, or field level, contain both a bay client 73a1, 73b1, 73c1 and a bay broker 73a2, 73b2, 73c2. It is also proposed that each edge device 72a, 72b, 72c contain an edge broker 72a1, 72b1, 72c1 and an edge client 72a2, 72b2, 72c2,

It is proposed that both the bay client 73a1 and the bay broker 73a2 use the same X.509 public key digital certificate for establishing the MQTTS connection with edge brokers 72a1, 72b1, 72c1 and edge clients 72a2, 72b2, 72c2 located at edge level for reducing X.509 digital public key certificate management overhead. This certificate as discussed here is associated with the corresponding private key that is securely stored inside the industrial devices at bay level.

This X.509 digital public key certificate for industrial devices at bay level could be the preconfigured initial enrolled certificate of the respective devices, i.e. their initial identity certificate, that is being configured in them during their installation phase at its operational site, i.e. the environment where it is finally intended to be operated, or it could be configured in the manufacturing phase by its Original Equipment Manufacturer, OEM.

The edge level brokers and clients as illustrated in Figure 7 could also similarly leverage a single X.509 certificate for establishing an MQTTS connection with the MQTTS clients and brokers located at cloud and bay level.

It is proposed that, during bootstrapping, i.e., when the bay device 73a, 73b, 73c first starts to execute at its operational site, the bay device may also generate another asymmetric key pair, a private and public key, here called a renewal key, which is intended to be used for its attestation at the next enrolment phase of its initial enrolled certificate, i.e. for renewal of keys.

It is proposed that the bay client 73a1, 73b1, 73c1 in each of these industrial bay devices 73a, 73b, 73c publishes the value of this public key, or its renewal key, on the topic "/Certificate_Expiry_Status" by the attribute claim "public_key_next", as illustrated the content of the JSON file below and in Figure 7, "7A".

MQTTS clients, or the bay client 73a1, 73b1, 73c1, in each of these industrial devices located at bay level also publishes their "associated X.509 public key digital certificate" status message under the same status topic **"/Certificate_Expiry_Status"** to the MQTTS brokers located at edge level. The Access Control List (ACL) in each of these MQTTS brokers, or edge brokers 72a1, 72b1, 72c1, located at edge level is preconfigured with the MQTTS clients to publish at this topic. It is proposed that publication of each of these messages may be performed in an autonomous manner by each of these industrial devices at bay level when their currently associated MQTTS certificate, i.e. the same X.509 certificate as used for establishing MQTTS connection at both broker and client inside these industrial devices, reaches a certain remaining lifetime value.

Example, if the X.509 digital certificate lifetime is 365 days when it was issued, and in due course with clock triggering an event when the remaining lifetime of the X.509 certificate reaches 100 days, then that respective industrial device publishes to the MQTTS brokers located at edge level, the edge broker, under this topic to proactively inform its X.509 digital certificate expiry status. This activation level (i.e., remaining lifetime of the X.509 digital certificate) that decides the trigger of this publication message from a bay level industrial device can be chosen based on user's policy. The format of this message from bay level industrial devices is illustrated below and in Figure 7 including the architecture and process flow. Such as the first bay device 73a, or industrial device, its MQTTS client publishes the below illustrated JSON content to the edge brokers 72a, or MQTTS brokers located at edge level. It should be noted that that secure publication of these messages may be done with the help of a TLS connection being established between each MQTTS client at bay level and brokers at edge level with the help of the preinstalled X.509 public key digital certificate as discussed above.

### Topic: /Certificate_Expiry_Status

### Message (in JSON format):

| | |
|---|---|
| "Client_id": | -- Bay 1 Device Identifier |
| "Client_id_Cert_Serial": | -- Certificate Serial no. of Bay 1 MQTTS Device |
| "Client_id_Cert_Serial_Planned_Expiry": | -- Remaining lifetime of Bay 1 Device MQTTS Certificate |
| "public_key_next": | -- Next public key |

### Topic: /Certificate_Expiry_Status

### Message (in JSON format):

| | |
|---|---|
| "Client_id": | -- Bay 2 Device Identifier |
| "Client_id_Cen_Seria!": | -- Certificate Serial no. of Bay 2 MQTTS Device |
| "Client_id_Cert_Serial_Planned_Expiry": | -- Remaining lifetime of Bay 2 Device MQTTS Certificate |
| "public_key_next": | -- Next public key |

### Topic: /Certificate_Expiry_Status

### Message (in JSON format):

| | |
|---|---|
| "Client_id": | -- Bay 3 Device Identifier |
| "Client_id_Cen_Serial": | -- Certificate Serial no. of Bay 3 MQTTS Device |
| "Client_id_Cert_Serial_Planned_Expiry": | -- Remaining lifetime of Bay 3 Device MQTTS Certificate |
| "public_key_next": | -- Next public key |

**SECOND PHASE** - The edge brokers 72a1, 72b1, 72c1, or MQTTS brokers located at edge level waits for a certain aggregate level of publication messages stemming from FIRST PHASE, i.e., from the underneath bay level industrial de-vices. This aggregate level is composed of two parameters, namely,
1) Number of received publication messages from bay level industrial devices under the topic **"/Certificate_Expiry_Status"** = N.
2) Periodic interval = X hours".

The architecture and process flow are illustrated in Figure 7.

The value of these parameters may be set via any out of band means in a preconfigured state inside the edge level devices 72a, 72b, 72c containing MQTTS edge brokers 72a1, 72b1, 72c1. Their respective values may be driven by user's policy. This combo parameter decides the further publication of aggregated X.509 public key digital certificate status of the bay level industrial devices as received from FIRST PHASE to the cloud 71 from edge level. The cloud 71 is also equipped with both MQTTS cloud brokers 71a1, 71b1, 71c1 and cloud clients 71a2, 71b2 71c2. When both the conditions as listed in 1) and 2) above becomes TRUE, then the edge brokers 72a1, 72b1, 72c1, MQTTS brokers located at edge level, may trigger the edge clients 72a2, 72b2, 72c2, or MQTT clients located at this same edge level to publish, "7B" in Figure 7, the aggregated X.509 public key digital certificate status message to the cloud brokers cloud brokers 71a1, 71b1, 71c1, which may be cloud level MQTTS brokers.

The content of the aggregated X.509 digital certificate status message is illustrated in Figure 7 as sent by the MQTTS edge clients 72a2, 72b2, 72c2, located at edge level, to the MQTTS cloud brokers 71a1, 71b1, 71c1. And the topic in which this message from edge level to cloud gets published is **"/Certificate_Expiry_Aggregate_Status".**

The message as JSON content may be: 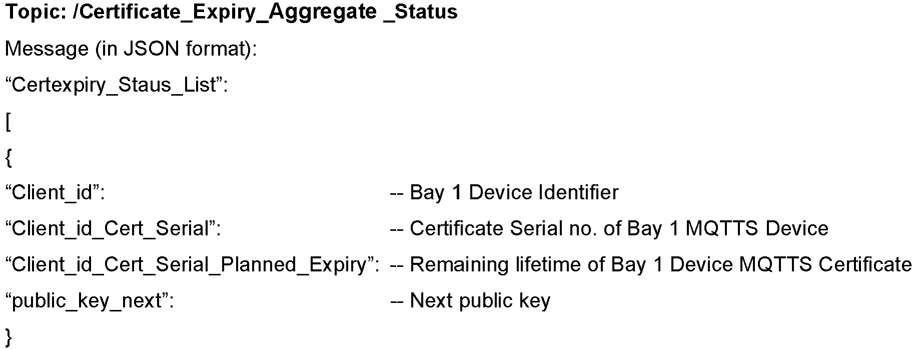 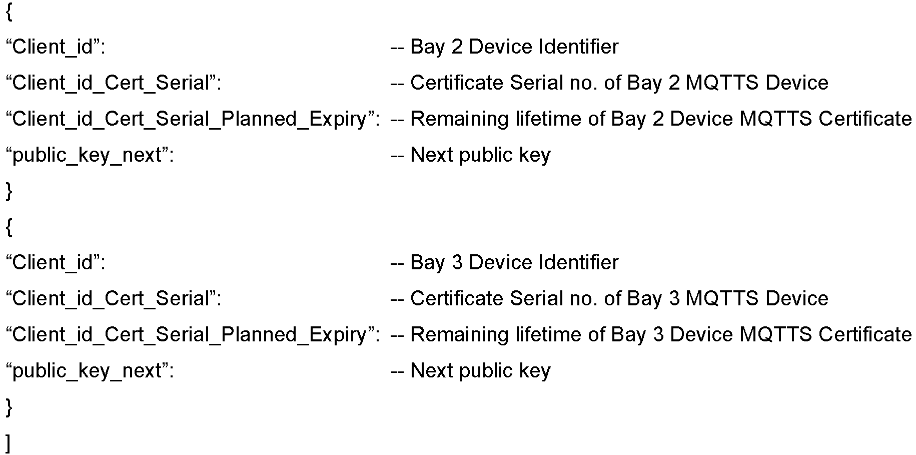 with publication triggering factor
1) Number of received publication messages from bay level devices under the topic **"/Certificate_Expiry_Status"** = N
2) Periodic interval = X (in hours)

The ACL in the MQTTS cloud brokers 71a1, 71b1, 71c1 may be preconfigured to allow MQTTS edge clients 72a2, 72b2, 72c2 to publish messages at this topic.

It is proposed that the JSON content of the message that gets published under the topic **"/Certificate_Expiry_Aggregate_Status"** may be composed of the last received messages under the topic **"/Certificate_Expiry_Status".** This may be done to ensure the transmission of the latest messages as subscribed under this topic being received by the MQTTS edge brokers 72a1, 72b1, 72c1 from the MQTTS bay clients 73a1, 73b1, 73c1 located at the bay level industrial devices.

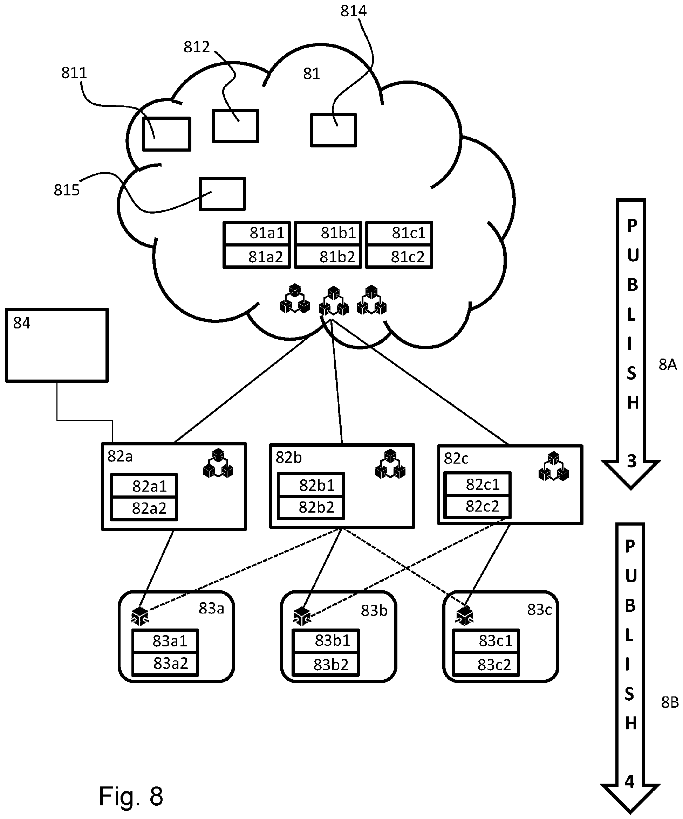

**THIRD PHASE** - Upon reception of published messages from the SECOND PHASE, 7B, it is proposed that either a security administrator or an automated agent 814 at the cloud level 81 may analyze this received message 7B, generate the renewed certificates for the affected industrial devices located at bay level, and then trigger the publication, 8Ain Figure 8, of an aggregated certificate renewal messages from the MQTTS cloud clients 81a2, 81b2, 81c2 to the MQTTS edge brokers 82a1, 82b1, 82c1.

The cloud level is equipped with a Certification Authority, CA, 815 for certificate generation and digital signing capability. This is illustrated in Figure 8 and the JSON message as illustrated below, showing the content of this publication message 8A under the topic **"ICertificate_Renewal Aggregated Status".**

### Publication triggering factor

Security administrator or an automated agent analyze the received status message from SECOND PHASE and trigger the publication message from MQTT cloud clients to MQTT edge brokers located at edge level devices under this topic /Certificate_Renewal_Status

### Topic: /Certificate_Renewal Aggregate _Status

### Message (in JSON format):

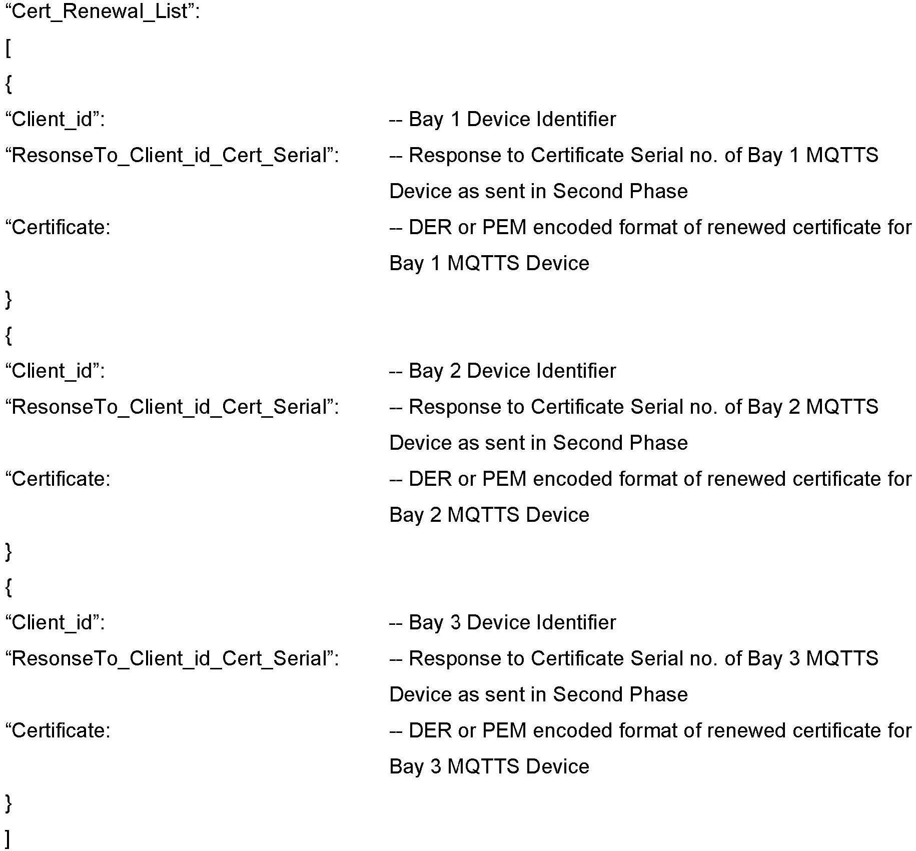

The ACL list in MQTTS edge brokers 82a1, 82b1, 82c1 is preconfigured with the MQTTS cloud clients 81a2, 81b2, 81c2 to publish a message at this topic. The renewed certificate for the affected bay level industrial devices is generated at the cloud level by attesting their corresponding public key as received during the SECOND phase from the attribute claim "public key_next" under the topic **"/Certificate_Expiry_Status".**

The attribute claim "ResponseTo_Client_id_Cert_Serial" holds the value of the certificate for which the renewal was performed. This helps in correlating the renewed certificate with the corresponding certificate for which the renewal was performed. It also helps in preventing any type of replay attack on such response message in a self-contained way (i.e. at MQTT message level itself in addition to TLS) as certificate serial numbers are unique. Utilization of this value in the response messages therefore brings uniqueness and any repeatable responses can be tracked for discarding by the bay level industrial devices.

**FOURTH PHASE** - It is proposed that each of the edge level devices 82a, 82b, 82c may analyze the messages 8A from THIRD PHASE as received in their corresponding MQTTS edge broker 82a1, 82b1, 82c1. They then determine to which bay level industrial devices their corresponding renewed certificate are to be sent. This notification is performed by the MQTTS edge clients 82a2, 82b2, 82c2 to the corresponding MQTTS bay brokers 83a2, 83b2, 83c2 in each of the bay level industrial devices 83a, 83b, 83c via a certificate status renewal message under the topic **"ICertificate_Renewal Status".** The ACL inside each of the MQTTS bay brokers 83a2, 83b2, 83c2 of industrial bay level devices is preconfigured with the MQTTS edge clients 82a2, 82b2, 82c2 to publish at this topic. This phase is illustrated in Figure 8 as 8B and the JSON messages as illustrated below.

### Topic: /Certificate_Renewal Status

### Message (in JSON format):

| | |
|---|---|
| "Client_id": | -- Bay 3 Device Identifier |
| "ResonseTo_Client_id_Cert_Serial": | -- Response to Certificate Serial no. of Bay 3 MQTTS Device as sent in Second Phase |
| "Certificate: | -- DER or PEM encoded format of renewed certificate for Bay 3 MQTTS Device |

### Topic: /Certificate_Renewal Status

### Message (in JSON format):

| | |
|---|---|
| "Client_id": | -- Bay 2 Device Identifier |
| "ResonseTo_Client_id_Cert_Serial": | -- Response to Certificate Serial no. of Bay 2 MQTTS Device as sent in Second Phase |
| "Certificate: | -- DER or PEM encoded format of renewed certificate for Bay 2 MQTTS Device |

### Topic: /Certificate_Renewal Status

### Message (in JSON format):

| | |
|---|---|
| "Client_id": | -- Bay 1 Device Identifier |
| "ResonseTo_Client_id_Cert_Serial": | -- Response to Certificate Serial no. of Bay 1 MQTTS Device as sent in Second Phase |
| "Certificate: | -- DER or PEM encoded format of renewed certificate for Bay 1 MQTTS Device |

It is proposed that each of the industrial devices as when they receive the message under this topic may sequentially perform the below listed operations.
1) Verify whether the value of the certificate serial number as contained inside the attribute claim "ResponseTo_Client_id_Cert_Serial" matches with the value of the attribute claim "Client_id_Cert_Serial" as sent in FIRST PHASE. This is to ensure that the renewed certificate as contained inside the attribute claim "Certificate" corresponds to the certificate whose expiry is reaching in accordance with the certificate remaining lifetime value as stated in FIRST PHASE. It also helps in detecting replay attack as stated earlier.
2) If from step 1), the corresponding values of those attribute claims matches, then it is proposed that the renewed certificate may be processed when the existing certificate expires. The renewed certificate may be put into use when the current certificate expires. It is also proposed that another fresh pair of asymmetric key pairs, i.e. public and private keys, is generated just like in the FIRST PHASE which will be used during the next renewal cycle.
It is proposed that the asymmetric key pairs associated with the expired certificate then is erased from the memory of bay level industrial devices to reduce memory footprint and prevent their misuse.

This way each of the bay level industrial devices gets proactively configured via MQTT with their renewed X.509 digital certificate before the expiry of their existing X.509 digital certificate.

The entire flow is holistically illustrated by the sequence diagram below.

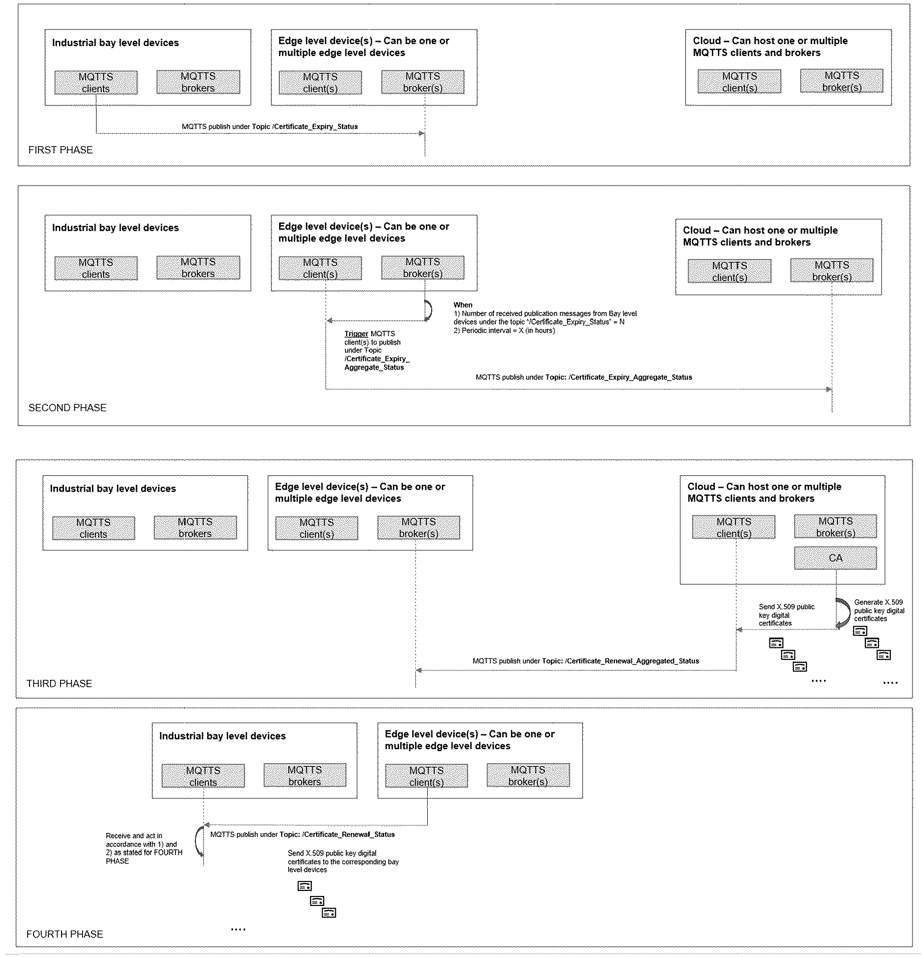

A method for edge-cloud computing will now be described with renewed reference to Figure 1, where the method may be used to form a communication architecture, which can be based on the Message Queuing Telemetry Transport (MQTT) protocol.

It is proposed that the method is performed in a system comprising a number of bay clients 13a, 13b, 13c, each bay client belonging to a bay, such as a bay comprising loT sensor devices, an edge broker 12a belonging to an edge device12, and components in a cloud 11.

The method comprises that bay clients 13a, 13b, 13c publishes primary equipment data to the edge broker 12a, and that the edge broker 12a publishes, or makes available, the equipment data in the cloud 11, where the publication may be done through subscription to a cloud MQTT client 11a.

It is proposed that the system, as illustrated in Figure 3, comprises a plurality of edge devices 32a, 32b, 32c, with thereto belonging edge brokers 32a1, 32b1, 32c1, where a primary edge device 32a, from the plurality of edge devices 32a, 32b, 32c, is designated to each bay 33a, and where the edge brokers 32a1, 32b1, 32c1 are bridged to each other, thus enabling making any sensor data published on one edge broker 32a available on any other edge broker 32b, 32c.

It is also proposed, as illustrated in Figure 4, that the equipment data may be published, or made available, by a cloud broker 41a at cloud level 41, in the cloud, where the cloud broker 41a may be bridged with each edge broker 42a, 42b, 42c, so that any sensor data published on any edge broker 42a, 42b, 42c is available in the cloud broker 41a in the cloud 41. The cloud broker 41a and edge brokers 42a, 42b, 42c may be MQTT brokers.

One proposed embodiment, as illustrated in Figure 5, teaches that several cloud brokers 51a1, 51b1, 51c1 may be publishing or making available the equipment data in the cloud 51, where each cloud broker 51a1, 51b1, 51c1 may be bridged with each edge broker 52a1, 52b1, 52c1, thereby making any sensor data published on any edge broker 52a1, 52b1, 52c1 available in the cloud brokers 51a1, 51b1, 51c1 in the cloud 51.

In an embodiment where several cloud brokers 51a1, 51b1, 51c1 are publishing or making available the equipment data in the cloud, it is proposed that the cloud brokers 51a1, 51b1, 51c1 may use load balancing 512 functionality to allocate certain edge data to specific cloud brokers. The load balancing functionality 512 may be based on varying capacity and health of the cloud 51, the edge, and/or the connecting link, along with the data traffic, thus providing reliable data delivery from the edge to the cloud.

It is proposed that the method may comprise allocating, by the load balancing functionality 512, the edge brokers 52a1, 52b1, 52c1 to a particular cloud broker, thereby dividing data traffic evenly among the cloud brokers 51a1, 51b1, 51c1, where it can be possible to monitor the traffic on continuous basis and alter the cloud to edge broker allocations to suit to traffic conditions.

It is proposed, as illustrated in Figure 6, that the method may comprise that each bay client 63a1 publishes its equipment data to its primary edge broker 62a1, using a primary path a1, and publishes its equipment data to a secondary edge broker 62b1, using a secondary path a2, where the secondary edge broker 62b1 belongs to an edge device 62b designated as a primary edge device to another bay 63b.

It is also proposed that the method could be implemented in a system, as illustrated in Figure 7, where each bay 73a, 73b, 73c comprises a bay broker 73a2, 73b2, 73c2, such as an MQTTS broker, where each edge device 72a, 72b, 72c comprises an edge client 72a2, 72b2, 72c2, such as an MQTTS client, and where each cloud broker 71a1, 71b1, 71c1 is associated with a cloud client 71a2, 71b2, 71c2, such as an MQTTS client. In such system, a first phase of the method as performed by the bay 73a, 73b, 73c may comprise:
- using, by the bay client 73a1, 73b1, 73c1 and the bay broker 73a2, 73b2, 73c2, a current digital public key certificate for establishment of the connection with an edge client 72a2, 72b2, 72c2 and edge broker 72a1, 72b1, 72c1, where both the bay client 73a1, 73b1, 73c1 and the bay broker 73a2, 73b2, 73c2 belonging to the same bay use the same current digital public key certificate, such as X.509 public key digital certificate;
- storing the corresponding current private key in a storage belonging to the industrial device at the bay;
- using a renewal digital public key certificate, such as X.509 public key digital certificate, for its attestation at a next enrolment phase of its current certificate, i.e. at renewal of its certificate; and
- publishing, by the bay client 73a2, 73b2, 73c2, a certificate status message to its primary edge broker, 7A.

It is proposed that the certificate status message may comprise:
- the ID of the client, i.e. "Client_id": Bay X Device Identifier;
- the value of its current public key, i.e. "Client_id_Cert_Serial": Certificate Serial no. of Bay X MQTTS Device;
- the remaining lifetime of the current key, i.e. "Client_id_Cert_Serial_Planned_Expiry": Remaining lifetime of Bay X Device MQTTS Certificate; and
- the renewal public key, i.e. "public key_ next".

It is proposed that the first phase of the method as performed by the bay client 73a1 and the bay broker 73a2, may comprise:
- using an initial digital public key certificate, such as X.509 public key digital certificate, as the current key when it first starts to execute at its operational site, and
- using the renewed certificate and thereto belonging key as the current key after renewal of a previously used key.

Embodiments proposes that a second phase of the method may comprise:
- receiving, by the edge broker 72a1, 72b1, 72c1, the certificate status message 7A from the bay client 73a1, 73b1, 73c1; and
- publishing, by the edge client 72a2, 72b2, 72c2, the certificate status message received from the edge broker 72a1, 72b1, 72c1 to a cloud broker 71a1, 71b1, 71c1.

It is further proposed that the second phase of the method may comprise that the edge broker 72a1, 72b1, 72c1 is:
- waiting for a set aggregate level of publication messages from the bay client 73a1, 73b1, 73c1 expressing that the current certificate is about to expire, and that it will expire within a set time interval; and
- triggering, when the set aggregate level has been reached, the edge client 72a2, 72b2, 72c2 to publish the certificate status message 7B to the cloud broker 71a1, 71b1, 71c1.

Embodiments teaches that a third phase of the method, illustrated in Figure 8 and as performed at cloud level by a security administrator or an automated agent 814, may comprise:
- analyzing received certificate status message 7B;
- generating renewed certificates for affected industrial devices located at the bay; and
- triggering the publication of an aggregated certificate renewal message 8A, comprising attributes holding the renewal key and the generated renewed certificate, from the cloud client 81a2, 81b2, 81c2 to the edge broker 82a1, 82b1, 82c1;
where the renewal key "ResponseTo_Client id Cert Serial" may hold the attributes of "public_key_ next".

It is proposed that the third phase may comprise generating renewed certificates by a Certification Authority, CA, 815 for certificate generation and digital signing capability at cloud level by attesting its corresponding renewal public key "public key_ next" as received in the certificate status message 7B.

Proposed embodiments teaches that a fourth phase of the method, as performed by the edge device 82a, 82b, 82c, may comprise:
- receiving, by the edge broker 82a1, 82b1, 82c1, the published certificate renewal message 8A from the cloud client 81a2, 81b2, 81c2;
- analyzing the received certificate renewal message;
- determining to which industrial devices, and to which bay the renewed certificate is to be sent; and
- notifying, by the edge client 82a2, 82b2, 82c2, the certificate renewal message 8B to the bay broker.

It is also proposed that the fourth phase of the method, as performed by the bay, comprises:
- receiving, by the bay broker 83a2, 83b2, 83c2, the certificate renewal message 8B;
- verifying, by the industrial device, whether the attributes in the received certificate renewal message holding the renewal public key, i.e. "ResponseTo_Client id Cert Serial", matches the renewal public key, i.e. "public key_ next", as sent in the certificate status message 7A; and
- processing the renewed certificate from the certificate renewal message 8B if the attributes in the received certificate renewal message holding the renewal public key matches the renewal public key.

It is further proposed that the fourth phase of the method, as performed by the industrial device at the bay, may comprise:
- putting the renewed certificate into use when the current certificate expires; and
- generating a new renewal digital public key certificate to be used during the next renewal cycle.

A system for edge-cloud computing is also proposed, which system will be described with a renewed reference to Figure 1, illustrating that the system may be adapted to form a communication architecture based on the Message Queuing Telemetry Transport, MQTT, protocol.

The proposed system includes a number of bay clients 13a1, 13b1, 13c1, each bay client belonging to a bay 13a, 13b, 13c, such as a bay comprising loT sensor devices. The system further comprises an edge broker 12a, belonging to an edge device 12 and part of a cloud 11, such as a cloud client 11a.

It is proposed that the bay clients 13a1, 13b1, 13c1 are adapted to publish primary equipment data to the edge broker 12a, and that the edge broker 12a is adapted to publish the equipment data, or makes the equipment data available, such as available for subscription, in the cloud 11.

Embodiments herein proposes that the system comprises a plurality of edge devices 32a, 32b, 32c, with thereto belonging edge brokers 32a1, 32b1, 32c1, where a primary edge device 32a, from the plurality of edge devices, is designated to each bay 33a. It is further proposed that the edge brokers 32a1, 32b1, 32c1 are adapted to be bridged so that any sensor data published on one edge broker 32a1 is available on any other edge broker 32b1, 32c1.

It is also proposed, as illustrated in Figure 4, that a cloud broker 41a at cloud level may be adapted to publish or make available the equipment data in the cloud 41, and where the cloud broker 41a is adapted to be bridged with each edge broker 42a1, 42b1, 42c1, so that any sensor data published on any edge broker 42a1, 42b1, 42c1 is available in the cloud broker 41a in the cloud.

It is proposed, as illustrated in Figure 5, that several cloud brokers 51a1, 51b1, 51c1 may be adapted to publish or make available the equipment data in the cloud 51, and where each cloud broker 51a1, 51b1, 51c1 may be adapted to be bridged with each edge broker 52a1, 52b1, 52c1 so that any sensor data published on any edge broker 52a1, 52b1, 52c1 may be available in the cloud brokers 51a1, 51b1, 51c1 in the cloud 51.

As mentioned, several cloud brokers 51a1, 51b1, 51c1 may be adapted to publish or make available the equipment data in the cloud 51, and the cloud brokers 51a1, 51b1, 51c1 may be adapted to use load balancing functionality 512 to allocate certain edge data to specific cloud brokers. A dynamic load balancing functionality 512 may be used which can be based on varying capacity and health of the cloud, the edge, and the connecting link, along with the data traffic, thus providing reliable data delivery from edge to cloud.

It is also possible to adapt the load balancing 512 to allocate the edge brokers to a particular cloud broker so that data traffic is evenly divided among the cloud brokers 51a1, 51b1, 51c1, i.e. to monitor the traffic on continuous basis and alter the cloud to edge broker allocations to suit to traffic conditions.

It should be understood, as illustrated in Figure 6, that each bay client 63a1, 63b1, 63c1 may be adapted to publish its equipment data to its primary cloud broker, using a primary path a1, b1, c1, and publish its equipment data to a secondary cloud broker, using a secondary path a2, b2, c2, where the secondary cloud broker belongs to an edge device designated as a primary edge device to another bay.

With renewed reference to Figure 7, it will now be described that each bay 73a, 73b, 73c may comprise a bay broker 73a2, 73b2, 73c2, such as an MQTTS broker, that each edge device 72a, 72b, 72c may comprise an edge client 72a2, 72b2, 72c2, such as an MQTTS client, and that each cloud broker 71a1, 71b1, 71c1 may be associated with a cloud client 71a2, 71b2, 71c2, such as an MQTTS client. In such system it is proposed that the system may be adapted perform key management, where, in a first phase, the bay 73a, 73b, 73c may be adapted to:
- use, by the bay client 73a1, 73b1, 73c1 and the bay broker 73a2, 73b2, 73c2, a current digital public key certificate, such as X.509 public key digital certificate, for establishment of the connection with an edge client 72a2, 72b2, 72c2 and edge broker 72a1, 72b1, 72c1, where both the bay client 73a1, 73b1, 73c1 and the bay broker 73a2, 73b2, 73c2 within the same bay device 73a, 73b, 73c are adapted to use the same current digital public key certificate;
- store the corresponding current private key in a storage belonging to the industrial device at the bay 73a, 73b, 73c;
- use a renewal digital public key certificate, such as X.509 public key digital certificate, for its attestation at a next enrolment phase of its current certificate, i.e., renewal; and
- publish, by the bay client 73a1, 73b1, 73c1, a certificate status message 7A comprising:
   - the ID of the client, i.e. "Client_id": Bay X Device Identifier;
   - the value of its current public key, i.e. "Client_id_Cert_Serial": Certificate Serial no. of Bay X MQTTS Device;
   - the remaining lifetime of the current key, i.e. "Client_id_Cert_Serial_Planned_Expiry": Remaining lifetime of Bay X Device MQTTS Certificate; and
   - the renewal public key, i.e. "public key_ next",
to its primary edge broker 72a1, 72b1, 72c1.

It is proposed that the bay client 73a1, 73b1, 73c1 and the bay broker 73a2, 73b2, 73c2 may be adapted to use an initial digital public key certificate, such as X.509 public key digital certificate, as the current key when it first starts to execute at its operational site, and to use the renewed certificate and thereto belonging key as the current key after renewal of a previously used key.

It is proposed that the edge device 72a, 72b, 72c may be adapted to receive, by the edge broker 72a1, 72b1, 72c1, the certificate status message 7A from the bay client 73a1, 73b1, 73c1, and publish 7B, by the edge client 72a2, 72b2, 72c2, the certificate status message received from the edge broker to a cloud broker 71a1, 71b1, 71c1.

Possible embodiments teaches that the edge broker 72a1, 72b1, 72c1 may be adapted to wait for a set aggregate level of publication messages from the bay client 73a1, 73b1, 73c1 expressing that the current certificate is about to expire, and that it will expire within a set time interval, and to trigger the edge client 72a2, 72b2, 72c2 to publish the certificate status message 7B to the cloud broker 71a1, 71b1, 71c1 when the set aggregate level has been reached.

With renewed reference to Figure 8, it is proposed that a security administrator or an automated agent 814 at cloud level 81 may be adapted to:
- analyse received certificate status message 7B;
- generate renewed certificates for affected industrial devices located at the bay; and
- trigger the publication of an aggregated certificate renewal message 8A, comprising attributes holding the renewal key, i.e. a "ResponseTo_Client id Cert Serial" that holds the attributes of "public key_ next", and the generated renewed certificate, from the cloud client to the edge broker.

It is proposed that a Certification Authority, CA, 815 for certificate generation and digital signing capability at cloud level 81 may be adapted to generate renewed certificates by attesting its corresponding renewal public key, i.e. "public key_ next", as received in the certificate status message 7B.

The edge device 82a, 82b, 82c may be adapted to:
- receive, by the edge broker, the published certificate renewal message 8A from the cloud client 81a2, 81b2, 81c2;
- analyse the received certificate renewal message 8A;
- determine to which industrial devices, and to which bay, the renewed certificate is to be sent; and
- notify, by the edge client 82a2, 82b2, 82c2, the certificate renewal message 8B to the bay broker 83a2, 83b2, 83c2.

It is proposed that the industrial device at the bay may be adapted to:
- receive, by the bay broker 83a2, 83b2, 83c2, the certificate renewal message 8B,
- verify whether the attributes in the received certificate renewal message holding the renewal public key "ResponseTo Client id_Cert Serial" matches the renewal public key "public key_ next" as sent in the certificate status message 7A; and
- process the renewed certificate from the certificate renewal message 8B if the attributes in the received certificate renewal message holding the renewal public key matches the renewal public key.

The industrial device at the bay may be adapted to put the renewed certificate into use when the current certificate expires and generate a new renewal digital public key certificate to be used during the next renewal cycle.

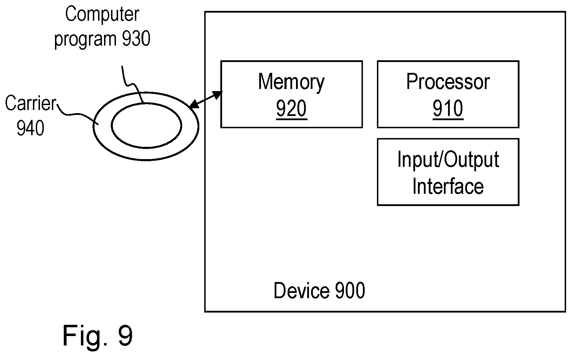

Embodiments herein may be implemented through a respective processor or one or more processors, such as the processor 910 of a processing circuitry in a device 900 depicted in Figure 9. It should be understood that this device may represent:
- a bay, or a to the bay belonging bay client, bay broker or industrial device;
- an edge device, or any to the edge device belonging edge broker or edge client; or
- a cloud broker or a cloud client;
and that all these devices are functioning according to being a part in the system as described above, with computer programs holding instructions which when executed by the respective processor, causes the processor to perform actions as performed by respective device according to the described method.

The processor 910 of a processing circuitry in the device 900 is depicted in Figure 9 together with respective computer program code for performing the functions and actions of the embodiments herein. The program code mentioned above may also be provided as a computer program product, for instance in the form of a data carrier carrying computer program code for performing the embodiments herein when being loaded into the respective device 900. One such carrier may be in the form of a CD ROM disc. It is however feasible with other data carriers such as a memory stick. The computer program code may furthermore be provided as pure program code on a server and downloaded to the device 900.

The device 900 may further comprise a memory 920 comprising one or more memory units. The memory 920 comprises instructions executable by the processor in the respective device 900. The memory 920 is arranged to be used to store e.g., media functions, indications, tags, information, data, configurations, communication data, and applications to perform the methods herein when being executed in the device 900.

In some embodiments, a computer program 930 comprises instructions, which when executed by the at least one processor 910 cause the at least one processor of the device 900 to perform the actions above.

In some embodiments, a carrier 940 comprises the respective computer program 930, wherein the carrier 940 is one of an electronic signal, an optical signal, an electromagnetic signal, a magnetic signal, an electric signal, a radio signal, a microwave signal, or a computer-readable storage medium.

When using the word "comprise" or "comprising" it shall be interpreted as nonlimiting, i.e. meaning "consist at least of".

The embodiments herein are not limited to the preferred embodiments described above. Various alternatives, modifications and equivalents may be used.

## Claims

1. A method for edge-cloud computing comprising:
- publishing, by a number of bay clients, each bay client belonging to a bay, primary equipment data to an edge broker, belonging to an edge device; and
- publishing, or making available, by the edge broker, the equipment data, in a cloud,
wherein the system comprises a plurality of edge devices, with thereto belonging edge brokers, where a primary edge device, from the plurality of edge devices, is designated to each bay, and where the edge brokers are bridged to each other, the method further comprising:
- making any sensor data published on one edge broker available on any other edge broker.

2. The method according to claim 1, comprising:
- publishing, or making available, by a cloud broker at cloud level, the equipment data in the cloud,
where the cloud broker is bridged with each edge broker.

3. The method according to claim 1 or 2, comprising several cloud brokers publishing or making available the equipment data in the cloud, and where each cloud broker is bridged with each edge broker, thereby making any sensor data published on any edge broker available in the cloud brokers.

4. The method according to any one of claims 1 to 3, comprising several cloud brokers publishing or making available the equipment data in the cloud, and using, by the cloud brokers, load balancing functionality to allocate certain edge data to specific cloud brokers.

5. The method according to claim 4, comprising allocating, by the load balancing functionality, the edge brokers to a particular cloud broker, thereby dividing data traffic evenly among the cloud brokers.

6. The method according to any preceding claim, comprising, by each bay client:
- publishing its equipment data to its primary edge broker; and
- publishing its equipment data to a secondary edge broker;
where the secondary edge broker belongs to an edge device designated as a primary edge device to another bay.

7. The method according to any preceding claim, in a system where each bay comprises a bay broker, where each edge device comprises an edge client, and where each cloud broker is associated with a cloud client, the method comprising:
- using, by the bay client and the bay broker, a current digital public key certificate for establishment of the connection with an edge client and edge broker, where both the bay client and the bay broker use the same current digital public key certificate;
- storing, by the bay, the corresponding current private key;
- using, by the bay, a renewal digital public key certificate for its attestation at a next enrolment phase of its current certificate; and
- publishing, by the bay client, a certificate status message comprising:
- the ID of the client;
- the value of its current public key;
- the remaining lifetime of the current key; and
- the renewal public key;
to its primary edge broker;
the method further comprising, by a security administrator or an automated agent at cloud level, after receipt of the certificate status message via the edge device:
- analysing received certificate status message;
- generating renewed certificates for affected industrial devices located at the bay; and
- triggering the publication of an aggregated certificate renewal message, comprising attributes holding the renewal key and the generated renewed certificate, from the cloud client to the edge broker;
the method further comprising by the bay:
- receiving, by the bay broker, the certificate renewal message via the edge device;
- verifying, by the industrial device at the bay, whether the attributes in the received certificate renewal message holding the renewal public key matches the renewal public key as sent in the certificate status message; and
- processing the renewed certificate from the certificate renewal message if the attributes in the received certificate renewal message holding the renewal public key matches the renewal public key.

8. A system for edge-cloud computing, where a number of bay clients, each bay client belonging to a bay are adapted to publish primary equipment data to an edge broker, belonging to an edge device, where the edge broker is adapted to publish the equipment data, or makes the equipment data available, in a cloud, wherein the system comprises a plurality of edge devices, with thereto belonging edge brokers, where a primary edge device, from the plurality of edge devices, is designated to each bay, where the edge brokers are adapted to be bridged so that any sensor data published on one edge broker is available on any other edge broker.

9. The system according to claim 8, wherein a cloud broker at cloud level is adapted to publish or make available the equipment data in the cloud, and where the cloud broker is adapted to be bridged with each edge broker.

10. The system according to claim 8 or 9, wherein several cloud brokers are adapted to publish or make available the equipment data in the cloud, and where each cloud broker is adapted to be bridged with each edge broker so that any sensor data published on any edge broker is available in the cloud brokers.

11. The system according to any one of claims 8 to 10, wherein several cloud brokers are adapted to publish or make available the equipment data in the cloud, and where the cloud brokers are adapted to use load balancing functionality to allocate certain edge data to specific cloud brokers.

12. The system according to claim 11, wherein the load balancing is adapted to allocate the edge brokers to a particular cloud broker so that data traffic is evenly divided among the cloud brokers.

13. The system according to any one of claims 8 to 12, wherein each bay client is adapted to
- publish its equipment data to its primary cloud broker, and
- publish its equipment data to a secondary cloud broker,
where the secondary cloud broker belongs to an edge device designated as a primary edge device to another bay.

14. The system according to any one of claims 8 to 13, where each bay comprises a bay broker, where each edge device comprises an edge client, and where each cloud broker is associated with a cloud client, the system is adapted to:
- use, by the bay client and the bay broker, a current digital public key certificate for establishment of the connection with an edge client and edge broker, where both the bay client and the bay broker are adapted to use the same current digital public key certificate;
- store, by the bay, the corresponding current private key;
- use, by the bay, a renewal digital public key certificate for its attestation at a next enrolment phase of its current certificate; and
- publish, by the bay client, a certificate status message comprising:
- the ID of the client;
- the value of its current public key;
- the remaining lifetime of the current key; and
- the renewal public key,
to its primary edge broker:
the system further comprising a security administrator or an automated agent at cloud level adapted to, after receipt of the certificate status message via the edge device:
- analyse received certificate status message;
- generate renewed certificates for affected industrial devices located at the bay; and
trigger the publication of an aggregated certificate renewal message, comprising attributes holding the renewal key and the generated renewed certificate, from the cloud client to the edge broker;
the industrial device at the bay being adapted to:
- receive, by the bay broker, the certificate renewal message via the edge device,
- verify whether the attributes in the received certificate renewal message holding the renewal public key matches the renewal public key as sent in the certificate status message; and
- process the renewed certificate from the certificate renewal message if the attributes in the received certificate renewal message holding the renewal public key matches the renewal public key.

15. A computer program comprising instructions, which when executed by a processor, causes the processor to perform actions according to any of the claims 1-7.

16. A carrier comprising the computer program of claim 16, wherein the carrier is one of an electronic signal, an optical signal, an electromagnetic signal, a magnetic signal, an electric signal, a radio signal, a microwave signal, or a computer-readable storage medium.
